# EUROPEAN PATENT APPLICATION

(11) **EP 4 417 047 A1**
(43) Date of publication of application: **21.08.2024**
(21) Application number: 23211381.1
(22) Date of filing: 22.11.2023
(51) Int. Cl.: A01K 29/00

(54) **LIVESTOCK BIOMETRIC INFORMATION SCANNING SYSTEM AND CONTROL METHOD THEREOF**

(30) Priority: 14.02.2023 KR 20230019349
(71) Applicant: M3sen Co., Ltd., Seoul 06159 (KR)
(72) Inventor: SEO, Man Hyoung, Bucheon-si, Gyeonggi-do (KR); KIM, Whee Seung, Bucheon-si, Gyeonggi-do (KR)
(74) Representative: Ruttensperger Lachnit Trossin Gomoll

(57) **Abstract**

Provided is a livestock biometric information scanning system and a control method thereof. The livestock biometric information scanning system includes a rail installed at a certain height from a floor of a livestock barn across a plurality of breeding spaces, a sensor unit installed to be movable along the rail and configured to obtain images and/or body temperatures of livestock located in the breeding spaces, a wire connected to the sensor unit, a driving unit configured to pull the wire, and a control unit configured to control movement of the sensor unit so that the sensor unit is located above any one of the plurality of breeding spaces through the driving unit.

## Description

### CROSS-REFERENCE TO RELATED APPLICATION

This application is based on and claims priority under 35 U.S.C. §119 to Korean Patent Application No. 10-2023-0019349, filed on February 14, 2023, in the Korean Intellectual Property Office, the disclosure of which is incorporated by reference herein in its entirety.

### BACKGROUND

### 1. Field

The inventive concept relates to a livestock biometric scanning system and a control method thereof.

### 2. Description of the Related Art

Identifying the body condition score, body weight, and back fat thickness of pregnant or lactating sows and identifying the right time for fertilization (estrus) of weaned sows are important breeding techniques in the pig farming industry. In addition, early diagnosis of diseases by measuring the body temperature of livestock in real time is an important breeding technique.

For these reasons, workers visually check the sows' body condition score, body weight, and the right time for fertilization, and also check the sows' body temperature through palpation. However, since this relies on workers' visual observation or palpation, the workers must frequently check a large number of sows, hundreds or more, in a short cycle, which demands much manpower and a lot of work time.

### SUMMARY

The inventive concept provides a livestock biometric scanning system capable of acquiring biometric information about livestock in a non-contact manner and a control method thereof.

Additional aspects will be set forth in part in the description which follows and, in part, will be apparent from the description, or may be learned by practice of the presented embodiments of the disclosure.

According to an aspect of the inventive concept, there is provided a livestock biometric information scanning system including a rail installed at a certain height from the floor of a livestock barn across a plurality of breeding spaces, a sensor unit installed to be movable along the rail and configured to obtain images and/or body temperatures of livestock located in the breeding spaces, a wire connected to the sensor unit, a driving unit configured to pull the wire, and a control unit configured to control movement of the sensor unit so that the sensor unit is located above any one of the plurality of breeding spaces through the driving unit.

According to another aspect of the inventive concept, there is provided a control method of a livestock biometric information scanning system, the control method including moving the sensor unit to upper parts of breeding spaces, obtaining images and/or body temperatures of livestock located in the breeding spaces through the sensor unit, and determining whether the livestock are upright through the images of the livestock to determine the right time for fertilization.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 is a diagram showing an overall structure of a livestock biometric information scanning system according to an embodiment;
FIG. 2 is a diagram showing a configuration for driving a livestock biometric information scanning system according to an embodiment;
FIG. 3 is a diagram showing a configuration for controlling a position of a sensor unit in a livestock biometric information scanning system according to an embodiment;
FIGS. 4 and 5 are diagrams showing a configuration of a sensor unit of a livestock biometric information scanning system according to an embodiment;
FIGS. 6 and 7 are diagrams of a rail of a livestock biometric information scanning system according to an embodiment;
FIG. 8 is a diagram showing a case where a livestock biometric information scanning system includes a plurality of sensor units according to an embodiment; and
FIG. 9 is a flowchart of a control method of a livestock biometric information scanning system according to an embodiment.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

Hereinafter, a livestock biometric information scanning system and a control method thereof according to an embodiment are described in detail with reference to the attached drawings.

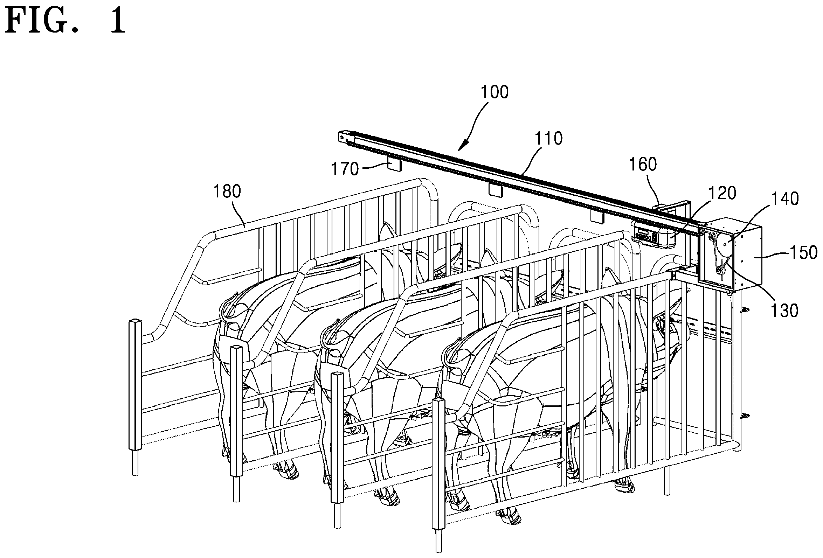

FIG. 1 is a diagram showing an overall structure of a livestock biometric information scanning system according to an embodiment.

Referring to FIG. 1, a livestock biometric information scanning system 100 may be installed in a livestock barn including at least one breeding space 180. One farm animal may exist in each breeding space 180. For example, each breeding space 180 may accommodate a lactating sow, a weaned sow, or the like. Hereinafter, the description is made assuming that sows are in the breeding spaces 180, but the description is not limited thereto, and the livestock biometric information scanning system 100 may be installed and operated in a space where various types of livestock are raised.

The livestock biometric information scanning system 100 installed in the livestock barn including the plurality of breeding spaces 180 includes a rail 110, a sensor unit 120, a wire 130, a driving unit 140, and a control unit 150. According to some embodiments, the livestock biometric information scanning system 100 may further include a battery charging unit 160 and/or an identifier storage unit 170. For convenience of explanation, hereinafter, the description is made assuming that the livestock biometric information scanning system 100 includes the battery charging unit 160 and the identifier storage unit 170.

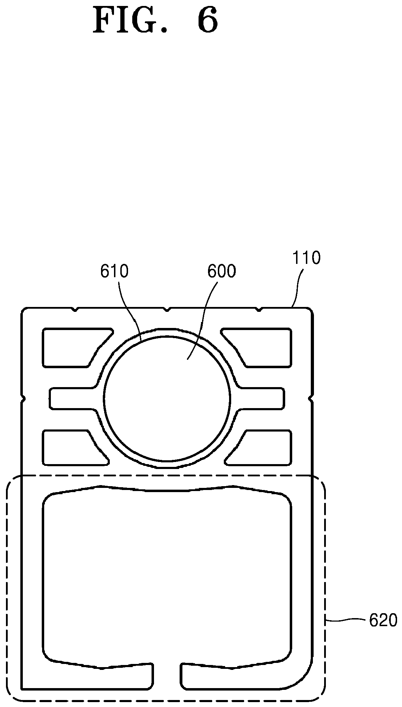

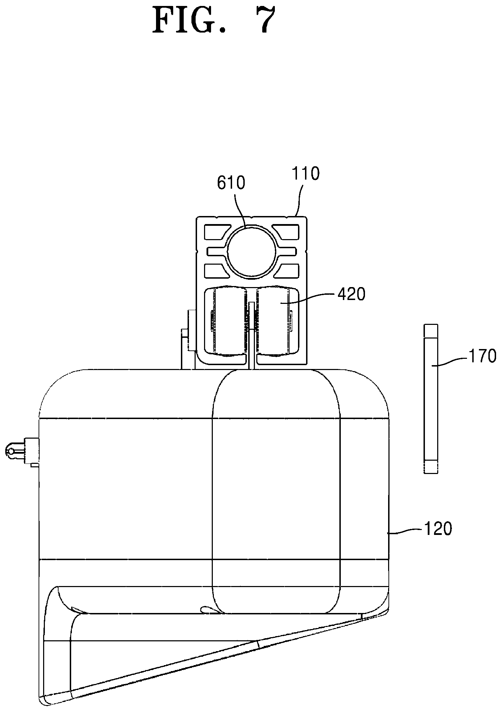

The rail 110 is installed at a certain height from the floor of the livestock barn across the plurality of breeding spaces 180. The rail 110 may include various metals, such as stainless steel (SUS) and aluminum. SUS has strong durability against ammonia gas, but it is very expensive and heavy, and thus, use thereof is difficult in reality. In addition, aluminum is inexpensive and lightweight, but it is easily corroded by ammonia gas in livestock barns, and thus, use thereof is difficult. To solve this problem, the rail 110 may be made of plastic material (e.g., ABS, PVC, etc.). An example of the rail 110 made of plastic material is shown in FIGS. 6 and 7.

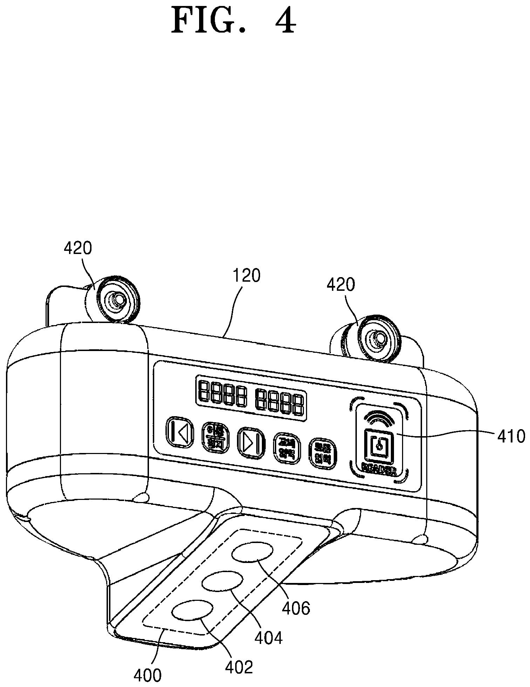

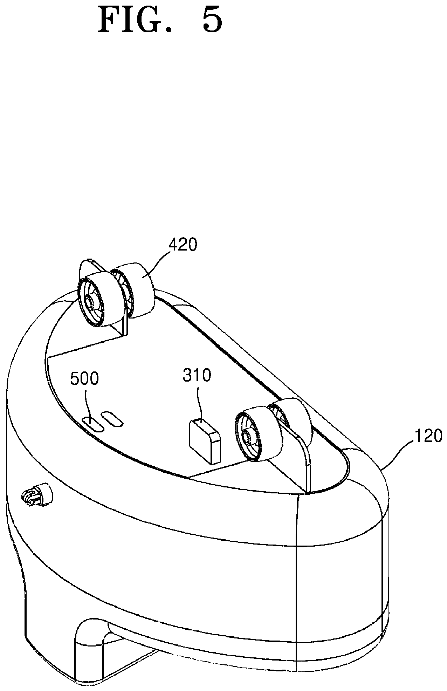

The sensor unit 120 is installed to be movable along the rail 110. The sensor unit 120 may include various types of sensors, such as an image sensor (i.e., a camera) that captures images and a temperature sensor that measures body temperatures. The sensor unit 120 measures biometric information such as images and/or body temperatures of a farm animal located in each breeding space 180 through various types of sensors. The detailed configuration of the sensor unit 120 is described in detail with reference to FIGS. 4 and 5.

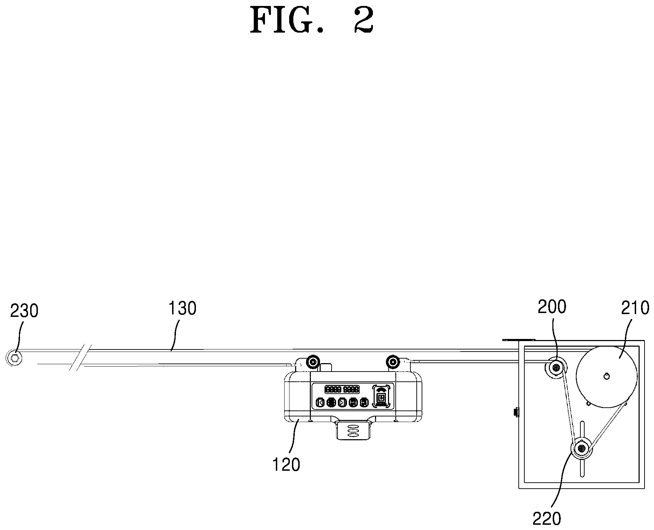

The wire 130 is connected to the sensor unit 120. The driving unit 140 pulls the wire 130 to move the sensor unit 120 along the rail 110. Since the sensor unit 120 is moved by pulling the wire 130 and a separate driving unit is not installed in the sensor unit 120, the sensor unit 120 may be manufactured smaller and lighter. When the sensor unit 120 is small and light, friction with the rail 110 may be reduced when moving along the rail 110, thereby minimizing noise generation and maintaining quietness. Therefore, it is possible to prevent stress on livestock due to noise generated when the sensor unit 120 moves. A method of driving the sensor unit 120 using the wire 130 is shown in FIG. 2.

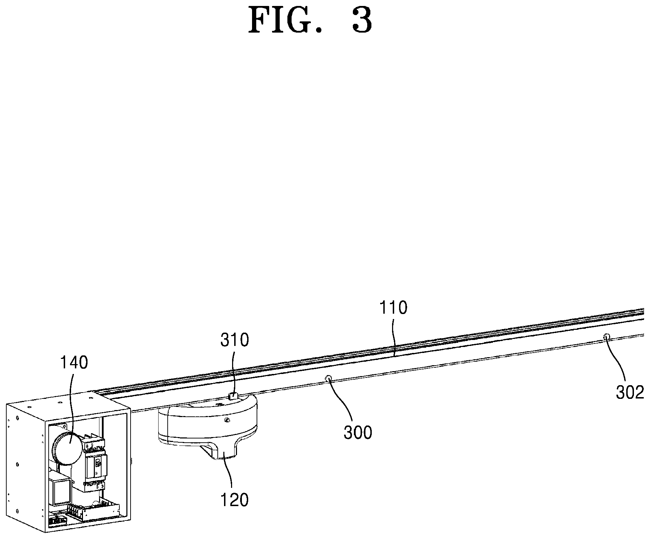

The control unit 150 controls the movement of the sensor unit 120 to a desired position through the driving unit 140. For example, the control unit 150 may control the movement of the sensor unit 120 to be located at an upper part of one of the breeding spaces 180 to obtain biometric information of livestock. The control unit 150 may control the movement of the sensor unit 120 to a desired position on the rail 110 by pulling the wire 130 in the left or right direction. A position control method for moving the sensor unit 120 to a desired position is shown in FIG. 3. The control unit 150 connected to the sensor unit 120 through wired or wireless communication may receive various values obtained by the sensor unit 120 (e.g., various biometric information such as images, body temperatures, etc.). According to an embodiment, the control unit 150 is connected to the sensor unit 120 wirelessly.

The control unit 150 may be implemented as a type of computing device including a microcontroller (MCU), memory, input/output unit, etc. According to an embodiment, the control unit 150 is located on one side of the end of the rail 110, but may be located in various positions. For example, the control unit 150 may be installed remotely and control the driving unit 140 wirelessly (e.g., various conventional wireless communication methods such as Bluetooth and Wi-Fi). In this case, the driving unit 140 may further include a module that receives remote control signals from the control unit 150. According to some embodiments, when the sensor unit 120 is held by an external force while moving, the control unit 150 may sense motor overcurrent of the driving unit 140 and cause an emergency stop.

The identifier storage unit 170 installed at a position on the rail 110 corresponding to each breeding space 180 may store livestock identification information. For example, when there are three breeding spaces 180 as shown in FIG. 1, the rail 110 includes identifier storage units 170 on the rail 110 corresponding to positions of the three breeding spaces 180, respectively. According to an embodiment, the identifier storage unit 170 may include an RFID tag. The identification information of a farm animal located in each breeding space 180 may be stored in the RFID tag. For example, the identifier storage unit 170 may include a space for attaching or accommodating the RFID tag, and a user may attach or insert the RFID tag containing identification information of a farm animal accommodated in each breeding space 180 to the identifier storage unit 170 corresponding to the breeding space 180. Alternatively, the RFID tag may be fixed to the identifier storage unit 170, and the user may use an RFID write module to store the identification information of a farm animal located in each breeding space 180 in the RFID tag of the identifier storage unit 170.

Since the sensor unit 120 does not include its own driving unit for movement, it does not require much power. Therefore, the sensor unit 120 may drive sensors using only an internal battery (not shown) without receiving power directly from the outside. The internal battery of the sensor unit 120 needs to be charged. The user may charge the internal battery by directly connecting a power line to the sensor unit 120. According to some embodiments, the internal battery of the sensor unit 120 may be automatically charged through the battery charging unit 160 located on one side of the rail 110. Since the sensor unit 120 is not moved by its own driving unit but is moved by pulling the wire 130, the sensor unit 120 may be stably driven even under harsh conditions in the livestock barn. In addition, even when the internal battery is discharged while the sensor unit 120 stays in the breeding spaces 180 for a long period of time to acquire biometric information, the sensor unit 120 may be moved to the position of the battery charging unit 160 to be charged.

FIG. 2 is a diagram showing a configuration for driving a livestock biometric information scanning system according to an embodiment.

Referring to FIGS. 1 and 2 together, pulleys 200, 210, 220, and 230 are positioned at both ends of the rail 110. The wire 130 is connected to both ends of the sensor unit 120 via at least one first pulley 230 located at one end of the rail 110, at least one second pulley 200, 210, and 220 located at the other end of the rail 110, and the driving unit 140. The number and shape of pulleys 200, 210, 220, and 230 located at both ends of the rail 110 may vary depending on an embodiment.

The driving unit 140 moves the sensor unit 120 by pulling the wire 130 connected to both sides of the sensor unit 120 in the left or right direction. That is, at least one pulley 210 of the pulleys located on one side of the rail 110 may be connected to a drive shaft of the driving unit 140. When the driving unit 140 rotates clockwise, the sensor unit 120 moves to the left along the rail 110, and when the drive unit 140 rotates counterclockwise, the sensor unit 120 moves to the right along the rail 110.

FIG. 3 is a diagram showing a configuration for controlling the position of a sensor unit in a livestock biometric information scanning system according to an embodiment.

Referring to FIG. 3, there is at least more than one magnet 300 and 302 on the rail 110. According to an embodiment, the magnets 300 and 302 may be positioned at predefined intervals along the rail 110. According to some embodiments, the magnets 300 and 302 may be positioned at each breeding space.

A Hall sensor 310 that detects the magnets 300 and 302 is positioned at one side of the sensor unit 120. Once the sensor unit 120 detects the magnets 300 and 302 through the Hall sensor 310 while moving along the rail 110, the sensor unit 120 transmits the detection information to the control unit 150. The control unit 150 controls the position of the sensor unit 120 based on the positions of the magnets 300 and 302.

According to an embodiment, when the magnet 300 and 302 is located at the position of each breeding space, the control unit 150 may move the sensor unit 120 to the upper part of each breeding space 180 by moving the sensor unit 120 until the sensor unit 120 detects the magnet 300 and 302.

According to some embodiments, the magnets 300 and 302 may be located at predefined positions on the rail 110, and location information (e.g., relative position from one end of the rail 110) of the magnets 300 and 302 may be stored in the control unit 150 in advance. The control unit 150 may control the movement of the sensor unit 120 to a desired position on the rail 110 by controlling the moving distance of the wire 130 in real time based on the positions of the magnets 300 and 302. The control unit 150 may determine the moving distance of the wire 130 according to the number of rotations of the motor (not shown) or the pulley 210 of the driving unit 140. For example, when a first breeding space is located at a distance A to the right from the position of the magnet 300 and 302, and a second breeding space is located at a distance B to the left from the position of the magnet 300 and 302, the control unit 150 may move the sensor unit 120 to the right by winding the wire 130 as much as the distance A based on the position of the magnet 300 and 302 to locate the sensor unit 120 at the upper part of the first breeding space, or move the sensor unit 120 to the left by winding the wire 130 as much as the distance B to locate the sensor unit 120 at the upper part of the second breeding space. To this end, the control unit 150 may have predefined distance information to move the sensor unit 120 based on the positions of the magnets 300 and 302.

FIGS. 4 and 5 are diagrams showing a configuration of a sensor unit of a livestock biometric information scanning system according to an embodiment.

Referring to FIGS. 4 and 5, the sensor unit 120 includes at least one sensor 400, an identifier receiving unit 410, and a wheel unit 420. In addition, the sensor unit 120 may include an internal battery (not shown), a communication unit (not shown), and the like. According to an embodiment, the sensor unit 120 may be wired or wirelessly connected to the control unit 150.

The sensor unit 120 may include at least one camera 402 and 404, and a temperature sensor 406. The cameras 402 and 404 capture images of livestock located in the breeding spaces. According to an embodiment, the sensor unit 120 may include an image camera 402 that captures two-dimensional images and a depth camera 404 that captures three-dimensional images. According to some embodiments, the sensor unit 120 may include an infrared camera capable of capturing images of livestock even at night. In addition, various types of cameras that capture images of livestock may be applied to an embodiment herein and are not limited to a specific type of cameras. The temperature sensor 406 measures the body temperatures of livestock located in the breeding spaces. The sensor unit 120 may further include various types of sensors.

The identifier receiving unit 410 receives livestock identification information from the identifier storage unit 170 located on one side of the rail 110 in FIG. 1. For example, when an RFID tag is in the identifier storage unit 170, the identifier receiving unit 410 may be implemented as an RFID reader. In addition, the identifier receiving unit 410 may be implemented as a reader corresponding to the type of storage medium used as the identifier storage unit 170. The identifier storage unit 170 of the rail 110 is disposed on the rail 110 so as to be adjacent to the identifier receiving unit 410 of the sensor unit 120 without interfering with the rail movement of the sensor unit 120. According to an embodiment, the control unit 150 may control the sensor unit 120 to be located at the upper part of each breeding space, and the identifier receiving unit 410 of the sensor unit 120 may read and transmit livestock identification information from the identifier storage unit 170 located on the rail 110 to the control unit 150.

According to some embodiments, when an RFID tag is attached to ears of livestock, etc., the identifier receiving unit 410 may recognize livestock identification information by reading the RFID tag attached to the livestock located in the breeding space. In this case, the identifier storage unit 170 may be omitted.

The wheel unit 420 includes wheels to minimize friction when the sensor unit 120 moves along the rail 110. A recessed wheel guide (620 in FIG. 6) capable of accommodating wheels may be in the rail 110, and examples thereof are shown in FIGS. 6 and 7.

The sensor unit 120 may further include a charging terminal 500 for charging the internal battery. The user may directly connect the power line to the charging terminal 500 to charge the internal battery of the sensor unit 120, but in this case, the user must directly connect the power line to the sensor unit 120 located on the rail 110 and disconnect the power line when charging is completed. The internal battery of the sensor unit 120 may be automatically charged through the battery charging unit 160 of FIG. 1.

According to an embodiment, the control unit 150 may periodically move the sensor unit 120 to the position of the battery charging unit 160 to charge the internal battery of the sensor unit 120. Alternatively, when the control unit 150 receives information on the battery shortage from the sensor unit 120, the sensor unit 120 may be moved to the position of battery charging unit 160. The charging terminal 500 of the sensor unit 120 may be of a wired charging type or a wireless charging type (electromagnetic induction type). In a case of the wired charging type, terminals of the battery charging unit 160 may be arranged so that the charging terminal 500 of the sensor unit 120 can directly contact terminals of the battery charging unit 160 when the sensor unit 120 moves along the rail 110 to the position of the battery charging unit 160. The position of the battery charging unit 160 may be predefined in the control unit 150. Alternatively, a magnet for determining the location of the battery charging unit 160 may be located at a position on the rail 110 corresponding to the position of the battery charging unit 160.

According to some embodiments, the sensor unit 120 may further include a memory unit (not shown) that stores image and/or body temperature information obtained through cameras and/or temperature sensors, and a wireless communication unit (not shown) that wirelessly transmits the image and/or body temperature information to the control unit 150. Wireless communication may become unstable or interrupted for various reasons, such as when the distance between the sensor unit 120 and the control unit 150 increases as the sensor unit 120 moves along the rail 110. When wireless communication is unstable or interrupted, the sensor unit 120 may store the obtained image and/or body temperature information in the memory unit and then transmit the data to the control unit 150 when the wireless communication becomes stable. Alternatively, when the sensor unit 120 enters within a certain distance, the control unit 150 may receive the image and/or body temperature information stored in the memory unit of the sensor unit 120 through wireless communication.

FIGS. 6 and 7 are diagrams of a rail of a livestock biometric information scanning system according to an embodiment.

Referring to FIGS. 6 and 7, the rail 110 may include lightweight and inexpensive plastic material that is not corroded by ammonia gas in the livestock barn. To withstand the weight of the sensor unit 120 or external pressure, the rail 110 including plastic material may have a certain thickness or more. The lower part of the rail 110 may include a recessed wheel guide 620 accommodating the wheel unit 420 of the sensor unit 120.

According to an embodiment, rail 110 including plastic material may be in a hollow form 600 to lighten the weight and reduce the cost thereof. That is, there is a hollow in the center of the rail 110. However, when the rail 110 in the hollow form 600 includes plastic material, there is a disadvantage in that the strength of the rail 110 is weakened. To compensate for this disadvantage, a metal reinforcement 610 may be additionally positioned in a hollow space of the rail 110 along the longitudinal direction of the rail 110. The metal reinforcement 610 may prevent deformation due to external forces such as load, tensile stress, or compressive stress. Since the metal reinforcement 610 is surrounded by plastic, the metal reinforcement 610 is not exposed to ammonia gas in the livestock barn, thereby preventing the reinforcement 610 from corrosion.

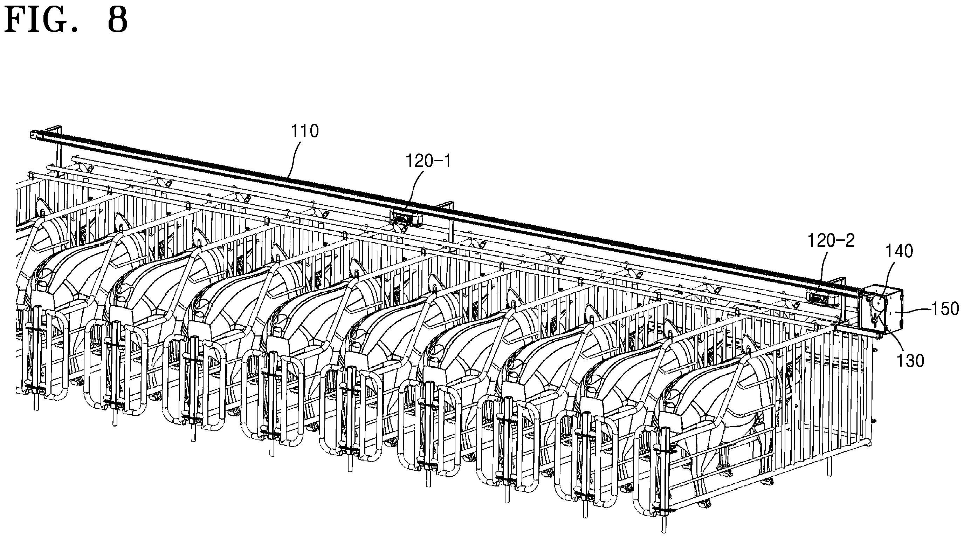

FIG. 8 is a diagram showing a case where a livestock biometric information scanning system according to an embodiment includes a plurality of sensor units.

Referring to FIG. 8, a livestock biometric information scanning system includes a plurality of sensor units 120-1 and 120-2 on one rail 110, thereby increasing the scanning speed to stably obtain biometric information. For example, a plurality of breeding spaces may be divided into a plurality of groups, and each group may include a sensor unit 120-1 and 120-2. According to an embodiment, the plurality of breeding spaces are divided into two groups, and the two groups include the sensor units 120-1 and 120-2, respectively.

The plurality of sensor units 120-1 and 120-2 are connected to a common wire 130 and controlled by a single driving unit 140 and a control unit 150. The first sensor unit 120-1 and the second sensor unit 120-2 are connected by the wire 130, and move in a right or left direction together. The relative positions of the sensor units 120-1 and 121-2 in the groups, respectively, may be the same. For example, when a first group includes four breeding spaces and a second group includes four breeding spaces, the first sensor unit 120-1 and the second sensor unit 120-2 may be spaced apart by the distance of the four breeding spaces, thereby making the second sensor unit 120-2 positioned at the location of the first breeding space of the second group when the first sensor unit 120-1 is positioned at the location of the first breeding space of the first group.

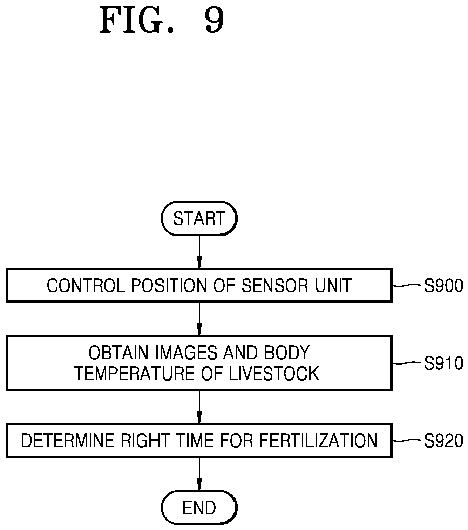

FIG. 9 is a flowchart of a control method of a livestock biometric information scanning system according to an embodiment.

Referring to FIGS. 1 and 9 together, the control unit 150 controls the position of the sensor unit 120 (S900). For example, the control unit 150 drives the wire 130 to move the sensor unit 120 to the upper part of the breeding space where measurement is needed. The control unit 150 may control the position of the sensor unit 120 using magnets installed on the rail 110, and an example thereof is shown in FIG. 3.

The control unit 150 obtains the images and/or body temperatures of livestock located in the breeding spaces through the sensor unit 120 (S910). The control unit 150 may determine the weight of livestock through two-dimensional or three-dimensional images. Various conventional methods for determining the weight of livestock through images may be applied to an embodiment.

In addition, the control unit 150 may determine whether the livestock are upright through images of the livestock and determine the right time for fertilization (S920). In general, the duration of estrus for sows is known to be 48 to 60 hours, and approximately 70% of the time from the first estrus is known to be the optimal time for insemination. If a weaned sow stands up without any reason and remains standing still for a certain period of time, it is determined that estrus has begun. Therefore, the control unit 150 may identify the right time for fertilization of livestock by identifying the sow's standing still through the images.

According to some embodiments, the control unit 150 may determine the livestock identification information stored in the RFID tag at the location of each breeding space through the sensor unit 120, and may output the livestock's image and/or body temperature information along with the livestock identification information. Alternatively, the control unit 150 may output the livestock identification information along with the information on the right time for fertilization of livestock.

According to an embodiment, the biometric information of livestock located in multiple breeding spaces may be obtained in a non-contact manner. According to an embodiment, since the sensor unit is moved by an externally driven wire, not by directly driving a motor, etc., it is possible to not only manufacture the sensing unit smaller and lighter but also reduce noise generation, thereby minimizing the stress on livestock. According to some embodiments, when the internal battery of the sensor unit is discharged, the sensor unit may be automatically recharged by moving the sensor unit using a wire. According to some embodiments, the right time for fertilization of livestock (e.g., sows) may be determined using biometric information (e.g., images, body temperature, etc.) of livestock located in a plurality of breeding spaces.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the spirit and scope of the disclosure as defined by the following claims.

Provided is a livestock biometric information scanning system and a control method thereof. The livestock biometric information scanning system includes a rail installed at a certain height from a floor of a livestock barn across a plurality of breeding spaces, a sensor unit installed to be movable along the rail and configured to obtain images and/or body temperatures of livestock located in the breeding spaces, a wire connected to the sensor unit, a driving unit configured to pull the wire, and a control unit configured to control movement of the sensor unit so that the sensor unit is located above any one of the plurality of breeding spaces through the driving unit.

## Claims

1. A livestock biometric information scanning system, comprising:
a rail installed at a certain height from a floor of a livestock barn across a plurality of breeding spaces;
a sensor unit installed to be movable along the rail and configured to obtain images and/or body temperatures of livestock located in the breeding spaces;
a wire connected to the sensor unit;
a driving unit configured to pull the wire; and
a control unit configured to control a movement of the sensor unit so that the sensor unit is located above any one of the plurality of breeding spaces through the driving unit.

2. The livestock biometric information scanning system of claim 1, wherein the rail comprises a rail frame including a plastic material containing a hollow space, and
a metal reinforcement in the hollow space of the rail frame along the longitudinal direction of the rail.

3. The livestock biometric information scanning system of claim 1 or 2, wherein the wire is fixed to both ends of the sensor unit via at least one first pulley located at one end of the rail, at least one second pulley located at the other end, and the driving unit.

4. The livestock biometric information scanning system according to one of claims 1-3, further comprising:
at least one magnet located along the rail; and
a Hall sensor located on one side of the sensor unit and configured to detect the at least one magnet when the sensor unit moves along the rail.

5. The livestock biometric information scanning system of claim 4, wherein the control unit is configured to control the position of the sensor unit based on the position of the at least one magnet.

6. The livestock biometric information scanning system according to one of claims 1-5, further comprising:
an identifier storage unit installed at a position on the rail corresponding to the position of each breeding space and configured to store livestock identification information; and
an identifier receiving unit located on one side of the sensor unit and configured to read the livestock identification information stored in the identifier storage unit.

7. The livestock biometric information scanning system of claim 6, wherein the identifier storage unit includes an RFID tag, and
the identifier receiving unit is configured to read livestock identification information stored in the RFID tag.

8. The livestock biometric information scanning system according to one of claims 1-7, further comprising:
a memory unit configured to store image or body temperature information acquired from the sensor unit, and
a wireless communication unit configured to wirelessly transmit the image or body temperature information to the control unit.

9. The livestock biometric information scanning system according to one of claims 1-8, further comprising:
a battery charging unit located on one side of the rail;
wherein the control unit is further configured to move the sensor unit to the position of the battery charging unit to charge an internal battery of the sensor unit through the battery charging unit.

10. The livestock biometric information scanning system according to one of claims 1-9, wherein the sensor unit comprises a wheel unit for reducing friction with the rail when moving along the rail.

11. The livestock biometric information scanning system of claim 10, wherein the rail comprises a recessed wheel guide for accommodating the wheel unit.

12. A control method performed by a control unit of a livestock biometric information scanning system including a sensor unit controlled to move along a rail using a wire, the control method comprising:
moving the sensor unit to upper parts of breeding spaces;
obtaining images and/or body temperatures of livestock located in the breeding spaces through the sensor unit; and
determining whether the livestock are upright through the images of the livestock to determine a right time for fertilization.

13. The control method of claim 12, further comprising:
recognizing livestock identification information stored in an RFID tag at a position corresponding to each breeding space through the sensor unit; and
outputting image and/or body temperature information about the livestock along with the livestock identification information.
